# EUROPEAN PATENT APPLICATION

(11) **EP 2 840 440 A1**
(43) Date of publication of application: **25.02.2015**
(21) Application number: 14180867.5
(22) Date of filing: 13.08.2014
(51) Int. Cl.: G02F 1/1335

(54) **Display device**

(30) Priority: 20.08.2013 JP 2013170780
(71) Applicant: Funai Electric Co., Ltd., Daito-shi, Osaka 574-0013 (JP)
(72) Inventor: Tanabe, Noritaka, Daito-shi, Osaka 574-0013 (JP)
(74) Representative: Global IP Europe Patentanwaltskanzlei

(57) **Abstract**

A display device (2) includes a display panel (24), a backlight unit (14), a diffuser (16), a support member (36), and a diffusion member (54). The display panel (24) is configured to display images. The backlight unit (14) is configured to emit light toward a rear face of the display panel (24). The diffuser (16) is disposed between the display panel (24) and the backlight unit (14), and is configured to diffuse the light from the backlight unit (14) toward the rear face of the display panel (24). The support member (36) supports a rear face of the diffuser (16) to prevent sagging of the diffuser (16) toward the backlight unit (14). The diffusion member (54) is disposed to surround the support member (36) in plan-view in order to diffuse the light toward a region of the diffuser (16) corresponding to the support member (36).

## Description

### CROSS-REFERENCE TO RELATED APPLICATIONS

This application claims priority to Japanese Patent Application No. 2013-170780 filed on August 20, 2013. The entire disclosure of Japanese Patent Application No. 2013-170780 is hereby incorporated herein by reference.

### BACKGROUND

### Field of the Invention

The present invention relates to a display device for displaying images. Background Information

Display devices are well-known that is equipped with a direct backlight unit that emits light toward the rear face of a display panel, such as a liquid crystal television set (see Japanese Unexamined Patent Application Publication No. 2010-272245 (Patent Literature 1), for example).

The housing of this display device holds a display panel, a backlight unit, a diffuser, and so forth. The backlight unit is disposed on the rear face side of the display panel. The diffuser is disposed between the display panel and the backlight unit. The light emitted from the backlight unit is diffused by the diffuser and then illuminates the rear face side of the display panel.

The housing of the display device also holds a support member for minimizing sagging of the diffuser to the backlight unit side. This support member is molded from a transparent plastic, for example, and supports the rear face side of the diffuser.

### SUMMARY

Nevertheless, it has been discovered that the following problem is encountered with the conventional display device discussed above. In particular, it has been discovered that part of the light emitted from the backlight unit is reflected by the surface of the support member or transmitted through the support member, after which it is incident on the rear face side of the diffuser. This produces a shadow of the support member in a region of the diffuser corresponding to the support member. As a result, there is unevenness in the brightness of the display panel.

The present invention is conceived in light of the above-mentioned problem. One aspect is to provide a display device with which unevenness in the brightness of the display panel can be reduced.

In view of the state of the known technology, a display device includes a display panel, a backlight unit, a diffuser, a support member, and a diffusion member. The display panel is configured to display images. The backlight unit is configured to emit light toward a rear face of the display panel. The diffuser is disposed between the display panel and the backlight unit, and is configured to diffuse the light from the backlight unit toward the rear face of the display panel. The support member supports a rear face of the diffuser to prevent sagging of the diffuser toward the backlight unit. The diffusion member is disposed around the support member to diffuse the light toward a region of the diffuser corresponding to the support member.

Also other objects, features, aspects and advantages of the present disclosure will become apparent to those skilled in the art from the following detailed description, which, taken in conjunction with the annexed drawings, discloses selected embodiments of the display device.

### BRIEF DESCRIPTION OF THE DRAWINGS

Referring now to the attached drawings which form a part of this original disclosure:
FIG. 1 is an elevational view of a display device in accordance with a first embodiment;
FIG. 2 is an exploded perspective view of the display device in accordance with the first embodiment;
FIG. 3 is a cross sectional view of the display device, taken along A-A line in FIG. 1;
FIG. 4A is a perspective view of a support member of the display device;
FIG. 4B is a rear side perspective view a seat of the support member of the display device;
FIG. 5 is a cross sectional view of the display device, illustrating the support member in FIG. 3 and a surrounding area;
FIG. 6 is an enlarged perspective view of the support member, illustrating the state before a diffusion member is attached to the support member;
FIG. 7 is an enlarged perspective view of the support member, illustrating the state when the diffusion member has been attached to the support member;
FIG. 8 is a cross sectional view of a display device, illustrating a support member and a surrounding area of a display device in accordance with a second embodiment;
FIG. 9 is a rear side perspective view of a diffusion member illustrated in FIG. 8;
FIG. 10 is a cross sectional view of a display device, illustrating a support member and a surrounding area of the display device in accordance with a third embodiment;
FIG. 11 is an enlarged perspective view of the support member and the surrounding area illustrated in FIG. 10; and
FIG. 12 is an enlarged perspective view of a support member and a surrounding area of a display device in accordance with a fourth embodiment.

### DETAILED DESCRIPTION OF EMBODIMENTS

Selected embodiments will now be explained with reference to the drawings. It will be apparent to those skilled in the art from this disclosure that the following descriptions of the embodiments are provided for illustration only and not for the purpose of limiting the invention as defined by the appended claims and their equivalents. Specifically, the numerical values, shapes, materials, constituent elements, layout positions and connection modes of the constituent elements, and so forth given in the following embodiments are provided all just for illustration only and not for the purpose of limiting the present invention. The present invention is merely defined by the appended claims. Of the constituent elements in the following embodiments, those not mentioned in an independent claim are not necessarily needed to achieve the object of the present invention, and will be described for understanding of the embodiments.

### FIRST EMBODIMENT

### Overall Configuration of Display Device

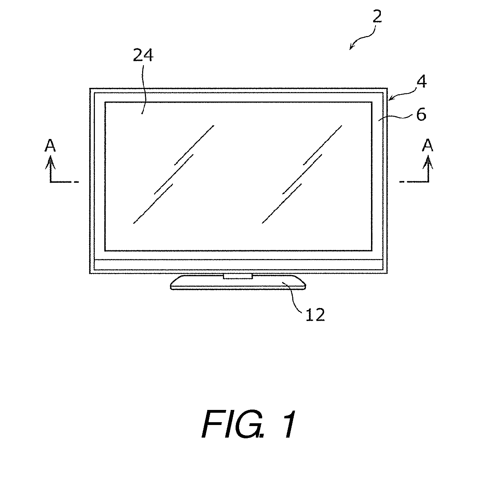

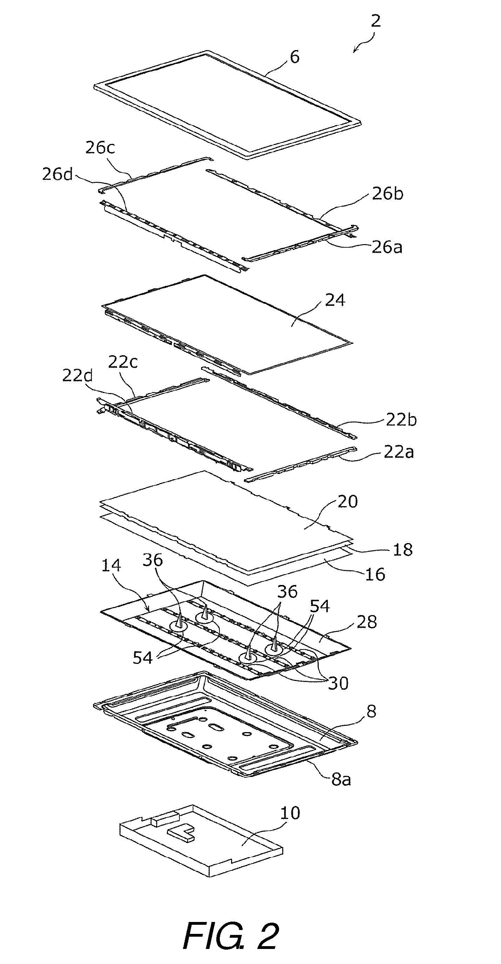

Referring now to FIGS. 1 and 2, the overall configuration of a display device 2 is illustrated in accordance with a first embodiment. FIG. 1 is an elevational view of the display device 2 in accordance with the first embodiment. FIG. 2 is an exploded perspective view of the display device 2 in accordance with the first embodiment in an exploded state.

As shown in FIGS. 1 and 2, the display device 2 in this embodiment is a liquid crystal television set equipped with a housing 4. The housing 4 includes a front cabinet 6 and a rear frame 8 that are fitted together.

The front cabinet 6 is in the form of a frame, and covers the outer peripheral part of a liquid crystal cell 24 (e.g., a display panel; discussed below). The front cabinet 6 is molded from plastic, for example.

The rear frame 8 is disposed so as to cover the rear face side of the liquid crystal cell 24. A flange 8a is provided to the outer peripheral part of the rear frame 8. The rear frame 8 is formed from sheet metal such as SECC (steel electrically chromate coated).

A power supply board or the like (not shown) for supplying power to the liquid crystal cell 24, etc., is attached to the outer face of the rear frame 8. A rear cover 10 is also attached to the outer face of the rear frame 8 so as to cover the above-mentioned power supply board or the like. A stand 12 for supporting the housing 4 from below is attached to the lower end of the rear cover 10. The rear cover 10 is molded from plastic, for example.

As shown in FIG. 2, a backlight unit 14, a diffuser 16, a pair of optical sheets 18 and 20, four cell guides 22a to 22d, the liquid crystal cell 24, and four bezels 26a to 26d are disposed in the interior of the housing 4.

### Internal Structure of Display Device

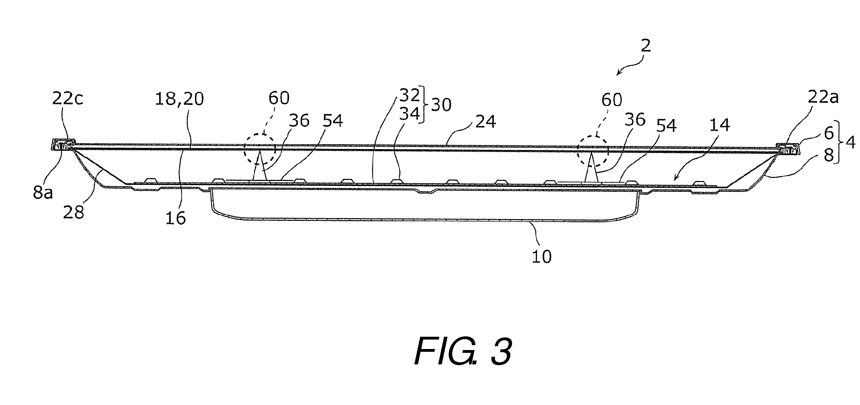

Referring now to FIGS. 2 and 3, the internal structure of the display device 2 will now be described. FIG. 3 is a cross sectional view of the display device 2, taken along A-A line in FIG. 1.

The backlight unit 14 is a direct backlight unit, for example, and is used to emit light toward the rear face of the liquid crystal cell 24. As shown in FIGS. 2 and 3, the backlight unit 14 has a reflective sheet 28 and a plurality of LED (light emitting diode) bars 30.

The reflective sheet 28 is disposed so as to cover the inner face of the rear frame 8. The reflective sheet 28 is used to reflect light from the LED bars 30 toward the rear face side of the liquid crystal cell 24.

The LED bars 30 are disposed substantially parallel to each other and spaced apart. The LED bars 30 each have a wiring board 32 and a plurality of LEDs 34 mounted on the wiring board 32 (each of the LEDs 34 forms a light source). The wiring board 32 is in the form of a slender plate. The LEDs 34 are disposed spaced apart in a row in the lengthwise direction of the wiring board 32. The wiring board 32 is attached over the reflective sheet 28 by thermally conductive double-sided table (not shown). The wiring board 32 is formed from a metal with high thermal conductivity, such as aluminum.

As shown in FIGS. 2 and 3, the diffuser 16 is in the form of a thin, rectangular plate, and is disposed between the backlight unit 14 and the liquid crystal cell 24. The diffuser 16 is used to diffuse light from the backlight unit 14 toward the rear face side of the liquid crystal cell 24.

The pair of optical sheets 18 and 20 are disposed so as to cover the front face side of the diffuser 16 in a state in which the two sheets 18 and 20 have been superposed each other. Each of the optical sheets 18 and 20 is used, for example, to guide light diffused by the diffuser 16 to the rear face of the liquid crystal cell 24.

As shown in FIG. 3, the outer peripheral parts of the above-mentioned reflective sheet 28, the diffuser 16, and the optical sheets 18 and 20 are supported by the flange 8a of the rear frame 8.

The four cell guides 22a to 22d are each slender in form. The four cell guides 22a to 22d are fitted together to make a frame. The cell guides 22a to 22d that have been fitted together into a frame are attached to the flange 8a of the rear frame 8.

The liquid crystal cell 24 is in the form of a rectangular panel. The outer peripheral part on the rear face side of the liquid crystal cell 24 is supported by the four cell guides 22a to 22d that have been fitted together into a frame. Light from the backlight unit 14 is directed at the rear face side of the liquid crystal cell 24 to display an image on the liquid crystal cell 24.

The four bezels 26a to 26d are each slender in form. The four bezels 26a to 26d are fitted together to make a frame. The four bezels 26a to 26d that have been fitted together into a frame cover the outer peripheral part on the front face side of the liquid crystal cell 24.

The front cabinet 6 is attached to the rear frame 8 so as to cover the four bezels 26a to 26d that have been fitted together into a frame.

### Configuration of Support Member

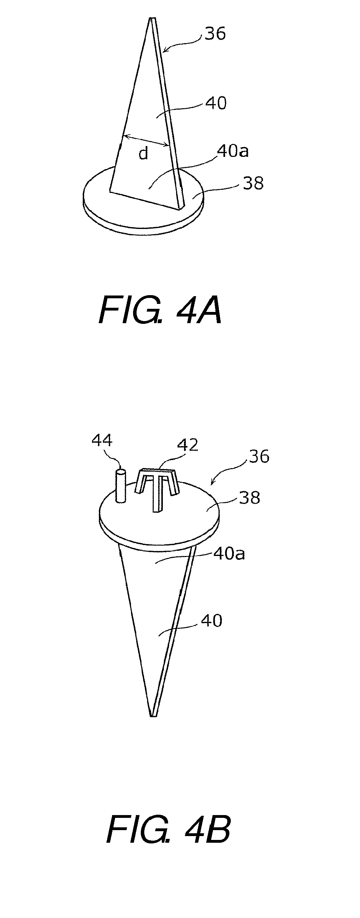

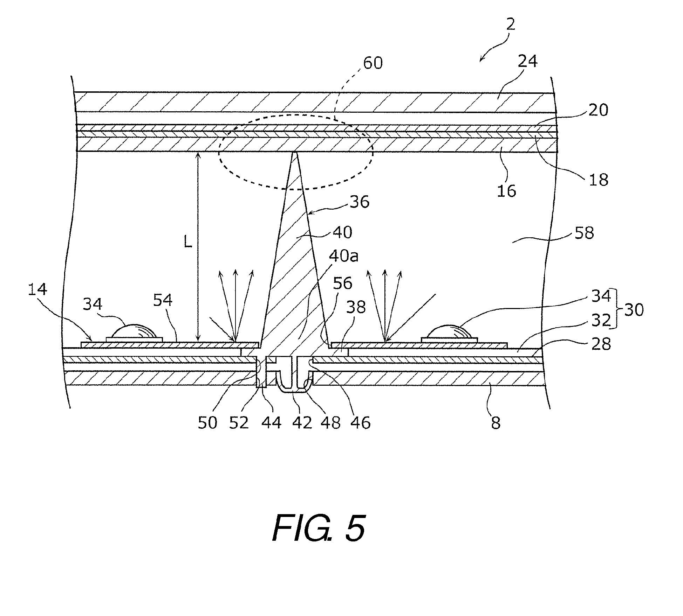

Next, the configuration of the support member 36 will be described through reference to FIGS. 4A, 4B and 5. FIG. 4A is a perspective view of the support member 36. FIG. 4B is a rear perspective view of a seat 38 of the support member 36. FIG. 5 is a cross sectional view of the display device 2, illustrating the support member 36 in FIG. 3 and the surrounding area of the support member 36.

As shown in FIGS. 2 and 3, a plurality of (four in this embodiment) support members 36 are disposed on the reflective sheet 28. The support members 36 are used to prevent sagging of the diffuser 16 to the backlight unit 14 side, and support the rear face side of the diffuser 16.

As shown in FIG. 4A, the support members 36 each have a seat 38 and a support 40. The support members 36 are molded from transparent plastic, for example.

The seats 38 are in the form of a circular plate. As shown in FIG. 4B, a hook 42 and a protrusion 44 are provided to the rear face of each seat 38. As shown in FIG. 5, the hooks 42 are inserted into through-holes 46 and 48 provided to the reflective sheet 28 and the rear frame 8, respectively. As shown in FIG. 5, the hooks 42 catch the through-holes 48 of the rear frame 8, which attaches the support members 36 to the rear frame 8. In a state in which the support members 36 have been attached to the rear frame 8, the seats 38 are disposed on the reflective sheet 28 (that is, on the backlight unit 14 side). The protrusions 44 are inserted into through-holes 50 and 52 provided to the reflective sheet 28 and the rear frame 8, respectively. When the protrusions 44 are inserted into the through-holes 52 of the rear frame 8, this restricts rotation of the support members 36 with respect to the rear frame 8.

As shown in FIG. 4A, the supports 40 are in the form of a thin triangular plate. The supports 40 extend from the seats 38 toward the diffuser 16 side. The width d of the supports 40 gradually decreases from the backlight unit 14 side to the diffuser 16 side. As shown in FIG. 5, in a state in which the support members 36 have been attached to the rear frame 8, the supports 40 support the rear face side of the diffuser 16. In particular, the supports 40 directly contact with the rear face of the diffuser 16 to prevent the sagging of the diffuser 16 toward the backlight unit 14.

### Configuration of Diffusion Member

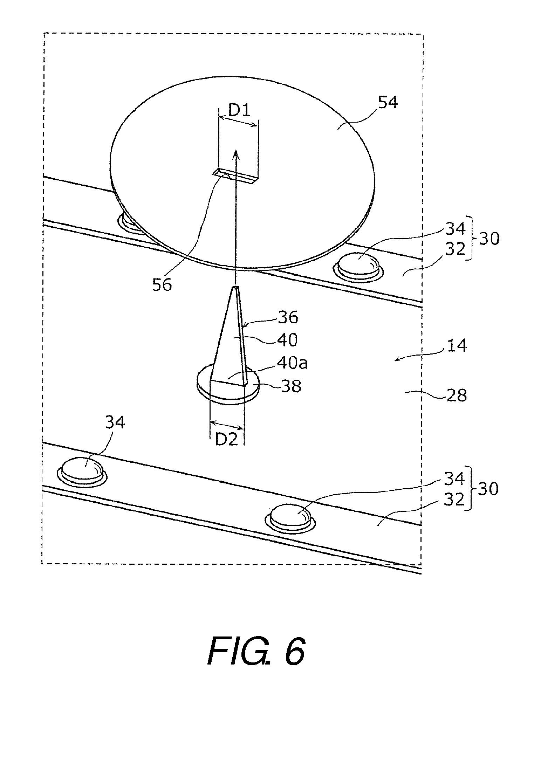

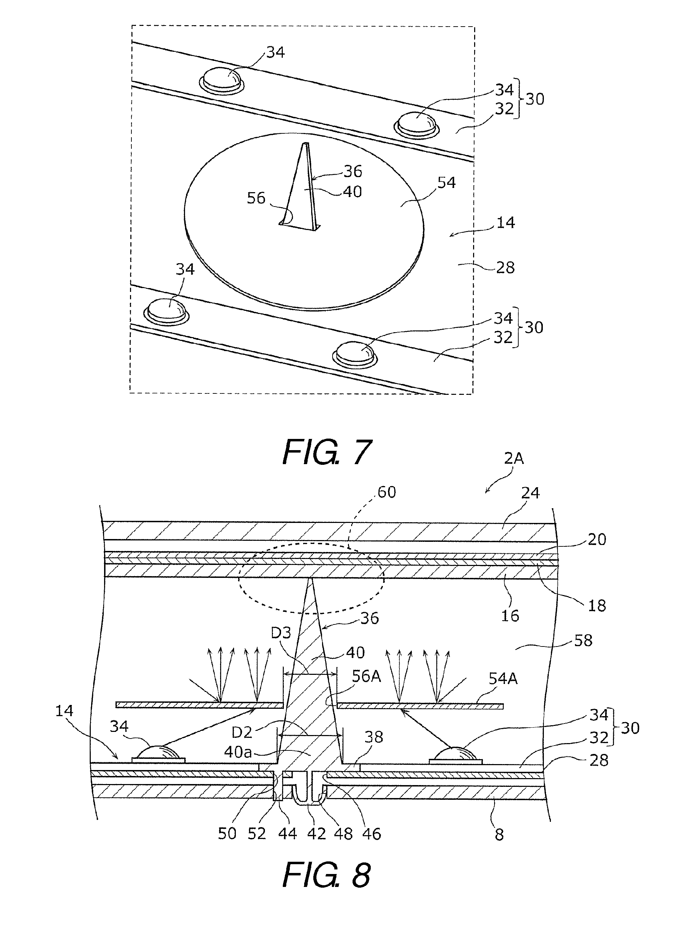

The configuration of diffusion members 54, which is the characteristic configuration of the display device 2 in this embodiment, will now be described through reference to FIGS. 6 and 7. FIG. 6 is an enlarged perspective view of the support member, illustrating the state before the diffusion member 54 is attached to the support member 36. FIG. 7 is an enlarged perspective view of the support member, illustrating the state when the diffusion member 54 has been attached to the support member 36.

As shown in FIG. 2 and FIGS. 5 to 7, each of the diffusion members 54 is attached to respective one of the support members 36. In the illustrated embodiment, the diffusion members 54 are in the form of a circular sheet. The diffusion members 54 are molded from plastic, such as polyethylene terephthalate (PET). The diffusion members 54 have an optical function that diffuses light when the light is reflected by the diffusion members 54 or the light is transmitted through the diffusion members 54. In other words, the diffusion members 54 are transmissive or translucent, for example, such that the diffusion member 54 diffuses light.

As shown in FIGS. 5 and 6, a slit-shaped hole 56 is provided in the middle of each diffusion member 54. The width D1 of the holes 56 is substantially the same as the width D2 of the ends 40a of the supports 40 on the backlight unit 14 side (e.g., the largest width of the supports 40).

As shown in FIGS. 6 and 7, when the diffusion members 54 are attached to the support members 36, the supports 40 are inserted into the holes 56 of the diffusion members 54. Consequently, as shown in FIG. 5, the parts of the diffusion members 54 that is around the holes 56 are supported or disposed on the seats 38 of the support members 36. In a state in which the diffusion members 54 have been attached to the support members 36, the diffusion members 54 are disposed so as to surround the periphery of the support members 36, and so as to be opposite the rear face side of the diffuser 16. At this point, the diffusion members 54 are attached to the support members 36 in a state of being suspended above the reflective sheet 28 by an amount equal to the thickness of the seats 38. Thus, in the illustrated embodiment, the diffusion members 54 are disposed spaced apart from the reflective sheet 28. Furthermore, even if the diffusion members 54 sag to the backlight unit 14 side so that the outer peripheral parts, etc., of the diffusion members 54 touch the reflective sheet 28, there will be no practical problem.

The diameter of the diffusion members 54 is set large enough to prevent contact with the LEDs 34 disposed around the support members 36. The diameter of the diffusion members 54 is approximately 200 mm, for example.

### Effect

Next, the effect obtained with the display device 2 in this embodiment will be described. Light emitted from the LEDs 34 is transmitted through the diffuser 16 and the optical sheets 18 and 20, and then shines on the rear face side of the liquid crystal cell 24. Part of the light emitted from the LEDs 34 is reflected by the rear face side of the diffuser 16, and is then further reflected by the reflective sheet 28. Thus, in the space 58 between the reflective sheet 28 and the diffuser 16, there is a mixture of light emitted from the LEDs 34, light reflected by the reflective sheet 28, light reflected by the rear face side of the diffuser 16, and so forth.

As mentioned above, it has been discovered that part of the light in the space 58 is reflected by the surface of the supports 40 and transmitted through the supports 40, and then incident on the rear face side of the diffuser 16. Consequently, shadows of the support members 36 tend to be produced in the regions 60 of the diffuser 16 corresponding to the support members 36 (that is, the parts supported by the supports 40 and the surrounding regions of the parts). The shape of these shadows is, for example, such that they extend radially from the places supported by the supports 40.

In contrast, with the display device 2 in this embodiment, as discussed above, the diffusion members 54 are disposed so as to surround the periphery of the support members 36. As shown in FIG. 5, part of the light in the space 58 is diffused upon being incident on the surface of the diffusion members 54. This diffused light is emitted toward the rear face side of the diffuser 16, and illuminates the regions 60 of the diffuser 16. This minimizes the shadows of the support members 36 that are produced in these regions 60. As a result, unevenness in the brightness of the liquid crystal cell 24 can be reduced.

The distance L between the diffusion members 54 and the diffuser 16 is preferably at least 25 mm. This more effectively reduces unevenness in the brightness of the liquid crystal cell 24. If the distance L is less than 25 mm, there is the risk that the brightness will be higher in the regions of the liquid crystal cell 24 corresponding to the support members 36, creating uneven brightness in the liquid crystal cell 24.

### SECOND EMBODIMENT

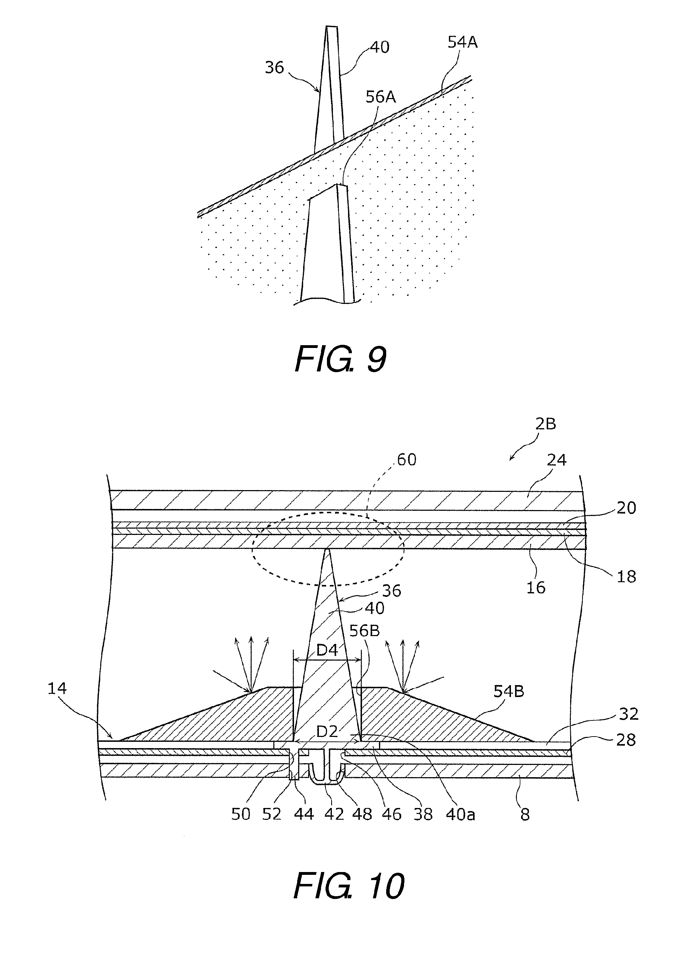

Referring now to FIGS. 8 and 9, a display device 2A in accordance with a second embodiment will now be explained. In view of the similarity between the first and second embodiments, the parts of the second embodiment that are identical to the parts of the first embodiment will be given the same reference numerals as the parts of the first embodiment. Moreover, the descriptions of the parts of the second embodiment that are identical to the parts of the first embodiment may be omitted for the sake of brevity.

FIG. 8 is a cross sectional view of the display device 2A, illustrating one of support members 36 and the surrounding area of the display device 2A. FIG. 9 is a rear side perspective view of a diffusion member illustrated in FIG. 8.

As shown in FIGS. 8 and 9, with the display device 2A in this embodiment, the width D3 of holes 56A of diffusion members 54A is less than the width D2 of ends 40a of the supports 40 of the backlight unit 14 side. Consequently, the diffusion members 54A are supported by the supports 40 in a state of being suspended above the seats 38. The diffusion members 54A are in the form of circular sheets, just as are the diffusion members 54 in the first embodiment above. Thus, in the illustrated embodiment, the diffusion members 54A are disposed spaced apart from the reflective sheet 28. Other than that, the diffusion members 54A are identical to the diffusion members 54.

Part of the light in the space 58 is diffused upon being incident on the front faces (that is, the faces on the diffuser 16 side) and the rear faces (that is, the faces on the backlight unit 14 side) of the diffusion members 54A. In particular, in this embodiment, the light from the LEDs 34 closest to the support members 36, which is a direct cause of the shadows on the diffuser 16, is diffused upon being incident on the rear faces of the diffusion members 54A. This more effectively minimizes shadows of the support members 36 in the regions 60 of the diffuser 16.

### THIRD EMBODIMENT

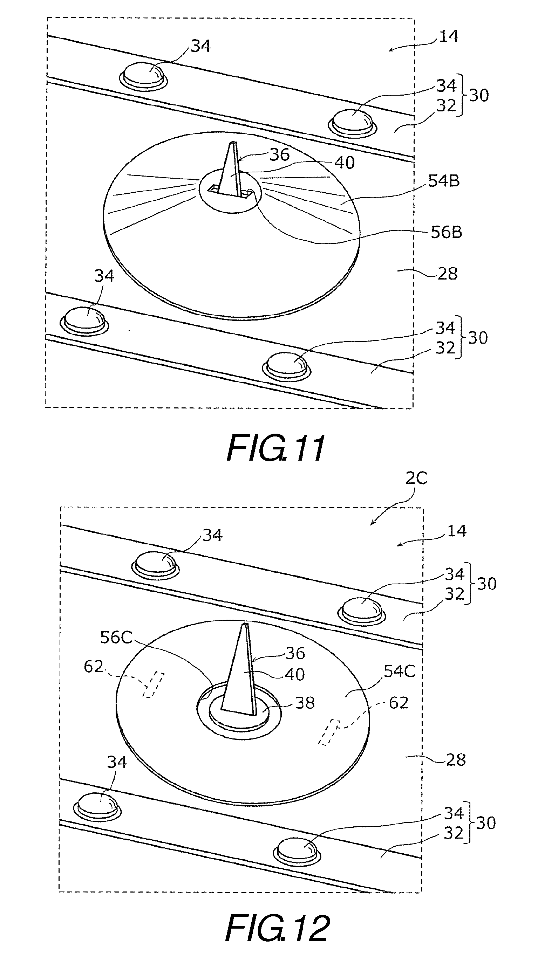

Referring now to FIGS. 10 and 11, a display device 2B in accordance with a third embodiment will now be explained. In view of the similarity between the first and third embodiments, the parts of the third embodiment that are identical to the parts of the first embodiment will be given the same reference numerals as the parts of the first embodiment. Moreover, the descriptions of the parts of the third embodiment that are identical to the parts of the first embodiment may be omitted for the sake of brevity.

FIG. 10 is a cross sectional view of the display device 2B, illustrating one of support members 36 and the surrounding area of the display device 2B. FIG. 11 is an enlarged perspective view of the support member 36 and the surrounding area.

As shown in FIGS. 10 and 11, with the display device 2B in this embodiment, diffusion members 54B are in the form of circular cones. A slit-shaped hole 56B is provided in the middle of each diffusion member 54B. The holes 56B are through-holes that pass through the diffusion members 54B in their thickness direction. The width D4 of the holes 56B is substantially the same as the width D2 of the ends 40a of the supports 40 on the backlight unit 14 side. The plurality of lines is illustrated on the surface of the diffusion member 54B in FIG. 11 merely for representing the cone shape of the diffusion members 54B.

When the diffusion members 54B are attached to the support members 36, the supports 40 are inserted into the holes 56B of the diffusion members 54B. As shown in FIG. 10, the parts around the holes 56B on the rear face side of the diffusion members 54B are supported on the seats 38 of the support members 36. Thus, in the illustrated embodiment, the diffusion members 54B are disposed spaced apart from the reflective sheet 28.

Even when the shape of the diffusion members 54B is something other than that of a sheet as in this embodiment, the same effect as in the first embodiment can still be obtained.

### FOURTH EMBODIMENT

Referring now to FIG. 12, a display device 2C in accordance with a fourth embodiment will now be explained. In view of the similarity between the first and fourth embodiments, the parts of the fourth embodiment that are identical to the parts of the first embodiment will be given the same reference numerals as the parts of the first embodiment. Moreover, the descriptions of the parts of the fourth embodiment that are identical to the parts of the first embodiment may be omitted for the sake of brevity.

FIG. 12 is an enlarged perspective view of one of support members 36 and the surrounding area of the display device 2C.

As shown in FIG. 12, with the display device 2C in this embodiment, diffusion members 54C are in the form of donut-shaped sheets. Circular holes 56C are provided in the middle of the diffusion members 54C. The diameter of the holes 56C is greater than the diameter of the seats 38. Thus, the holes 56C has a diameter that is larger than a dimension of the seats 38.

The supports 40 are inserted into the holes 56C of the diffusion members 54C when the diffusion members 54C are disposed around the support members 36. Consequently, the diffusion members 54C are disposed so as to be in contact with the reflective sheet 28. The diffusion members 54C are fixed on the reflective sheet 28 by double-sided tape 62, for example. Thus, in the illustrated embodiment, the diffusion members 54C are directly disposed on the reflective sheet 28.

Even when the diffusion members 54C are not attached to the support members 36 as in this embodiment, the diffusion members 54C can still be disposed so as to surround the periphery of the support members 36 and so as to be opposite the rear face side of the diffuser 16. Consequently, the same effect as in the first embodiment can be obtained.

The display devices 2, 2A, 2B and 2C in accordance with the first to fourth embodiments of the present invention are described above. However, the present invention is not limited to or by these embodiments. For example, the above embodiments can be combined with one another.

In the above embodiments, the display devices 2, 2A, 2B and 2C are a liquid crystal television set. However, the display devices 2, 2A, 2B and 2C need not be a liquid crystal television set, and can instead be a liquid crystal monitor used in a personal computer, for example.

In the above embodiments, a plurality of support members 36 are provided. However, just one support member 36 can be provided.

In the above embodiments, the diffusion members 54, 54A, 54B and 54C are circular. However, this is not the only option, and they can instead be square, pentagonal, or some other polygonal shape, or they can be elliptical or any other shape desired.

The display device of the present invention can be applied, for example, as a liquid crystal television set.

The display device in accordance with one aspect of the present invention includes a display panel configured to display images, a backlight unit configured to emit light toward a rear face of the display panel, a diffuser disposed between the display panel and the backlight unit, and configured to diffuse the light from the backlight unit toward the rear face of the display panel, a support member supporting a rear face of the diffuser to prevent sagging of the diffuser toward the backlight unit, and a diffusion member disposed around the support member to diffuse the light toward a region of the diffuser corresponding to the support member.

With this aspect, the diffusion member is disposed so as to surround the periphery of the support member. Thus, part of the light from the backlight unit is diffused toward the region of the diffuser corresponding to the support member upon being incident on the diffusion member. This minimizes or prevents the shadow of the support member produced in the region, and allows unevenness in the brightness of the display panel to be reduced.

For example, with the display device in accordance with one aspect of the present invention, the configuration can be such that the diffusion member is a sheet-like member, and the diffusion member is disposed to face with the rear face of the diffuser.

With this aspect, the diffusion member can be in the form of a sheet.

For example, with the display device in accordance with one aspect of the present invention, the configuration can be such that the support member includes a seat, and a support that extends from the seat toward the diffuser and supports the rear face of the diffuser. Also, the configuration can be such that the diffusion member has a hole through which the support is disposed to attach the diffusion member to the support member.

With this aspect, the hole is provided to the diffusion member. Thus, the diffusion member can be attached to the support member by inserting the support into the hole.

For example, with the display device in accordance with one aspect of the present invention, the configuration can be such that a portion of the diffusion member around the hole is supported on the seat.

With this aspect, the diffusion member can be attached to the support member in a state in which the portion of the diffusion member that is around the hole is supported on the seat.

For example, with the display device in accordance with one aspect of the present invention, the configuration can be such that the support has a width that gradually decreases as moving in a direction from the backlight unit to the diffuser, and the hole has a width that is less than the width of the support at an end of the support closer to the backlight unit.

With this aspect, since the width of the hole is less than the width of the end of the support on the backlight unit side, the diffusion member can be attached to the support member in a state in which the diffusion member is suspended above the seat.

For example, with the display device in accordance with one aspect of the present invention, the configuration can be such that the diffusion member has a hole through which the support member is disposed, and the hole has a diameter that is larger than a dimension of the seat.

For example, with the display device in accordance with one aspect of the present invention, the configuration can be such that a distance between the diffuser and the diffusion member is at least 25 mm.

With this aspect, since the distance between the diffuser and the diffusion member is at least 25 mm, it is less likely that the brightness will be too high in the region of the diffuser corresponding to the support member.

For example, with the display device in accordance with one aspect of the present invention, the configuration can be such that the backlight unit has a light source that is configured to emit the light toward the rear face of the display panel, and a reflective sheet that is configured to reflect the light from the light source toward the rear face of the display panel, and such that the support member is disposed on the reflective sheet.

With this aspect, since the backlight unit has the light source and the reflective sheet, the support member can be disposed on the reflective sheet.

For example, with the display device in accordance with one aspect of the present invention, the configuration can be such that the diffusion member is disposed spaced apart from the reflective sheet.

For example, with the display device in accordance with one aspect of the present invention, the configuration can be such that the diffusion member is disposed on the reflective sheet.

With the display device of the present invention, unevenness in the brightness of the display panel can be reduced.

In understanding the scope of the present invention, the term "comprising" and its derivatives, as used herein, are intended to be open ended terms that specify the presence of the stated features, elements, components, groups, integers, and/or steps, but do not exclude the presence of other unstated features, elements, components, groups, integers and/or steps. The foregoing also applies to words having similar meanings such as the terms, "including", "having" and their derivatives. Also, the terms "part," "section," "portion," "member" or "element" when used in the singular can have the dual meaning of a single part or a plurality of parts unless otherwise stated.

As used herein, the following directional terms "forward", "rearward", "front", "rear", "up", "down", "above", "below", "upward", "downward", "top", "bottom", "side", "vertical", "horizontal", "perpendicular" and "transverse" as well as any other similar directional terms refer to those directions of a display device in an upright position. Accordingly, these directional terms, as utilized to describe the display device should be interpreted relative to a display device in an upright position on a horizontal surface. The terms "left" and "right" are used to indicate the "right" when referencing from the right side as viewed from the front of the display device, and the "left" when referencing from the left side as viewed from the front of the display.

The term "attached" or "attaching", as used herein, encompasses configurations in which an element is directly secured to another element by affixing the element directly to the other element; configurations in which the element is indirectly secured to the other element by affixing the element to the intermediate member(s) which in turn are affixed to the other element; and configurations in which one element is integral with another element, i.e. one element is essentially part of the other element. This definition also applies to words of similar meaning, for example, "joined", "connected", "coupled", "mounted", "bonded", "fixed" and their derivatives. Finally, terms of degree such as "substantially", "about" and "approximately" as used herein mean an amount of deviation of the modified term such that the end result is not significantly changed.

While only selected embodiments have been chosen to illustrate the present invention, it will be apparent to those skilled in the art from this disclosure that various changes and modifications can be made herein without departing from the scope of the invention as defined in the appended claims. For example, unless specifically stated otherwise, the size, shape, location or orientation of the various components can be changed as needed and/or desired so long as the changes do not substantially affect their intended function. Unless specifically stated otherwise, components that are shown directly connected or contacting each other can have intermediate structures disposed between them so long as the changes do not substantially affect their intended function. The functions of one element can be performed by two, and vice versa unless specifically stated otherwise. The structures and functions of one embodiment can be adopted in another embodiment. It is not necessary for all advantages to be present in a particular embodiment at the same time. Every feature which is unique from the prior art, alone or in combination with other features, also should be considered a separate description of further inventions by the applicant, including the structural and/or functional concepts embodied by such feature(s). Thus, the foregoing descriptions of the embodiments according to the present invention are provided for illustration only, and not for the purpose of limiting the invention as defined by the appended claims and their equivalents.

## Claims

1. A display device comprising:
a display panel configured to display images;
a backlight unit configured to emit light toward a rear face of the display panel;
a diffuser disposed between the display panel and the backlight unit, and configured to diffuse the light from the backlight unit toward the rear face of the display panel;
a support member supporting a rear face of the diffuser to prevent sagging of the diffuser toward the backlight unit; and
a diffusion member disposed around the support member to diffuse the light toward a region of the diffuser corresponding to the support member.

2. The display device according to claim 1, wherein
the diffusion member is a sheet-like member, and
the diffusion member is disposed to face with the rear face of the diffuser.

3. The display device according to claim 1 or 2, wherein
the support member includes a seat, and a support that extends from the seat toward the diffuser and supports the rear face of the diffuser.

4. The display device according to claim 1, 2 or 3, wherein
the diffusion member has a hole through which the support is disposed to attach the diffusion member to the support member.

5. The display device according to claim 4, wherein
a portion of the diffusion member around the hole is supported on the seat.

6. The display device according to claim 4 or 5, wherein
the support has a width that gradually decreases as moving in a direction from the backlight unit to the diffuser, and
the hole has a width that is less than the width of the support at an end of the support closer to the backlight unit.

7. The display device according to claim 1, 2 or 3, wherein
the diffusion member has a hole through which the support member is disposed,
and
the hole has a diameter that is larger than a dimension of the seat.

8. The display device according to any one of claims 1 to 7, wherein
a distance between the diffuser and the diffusion member is at least 25 mm.

9. The display device according to any one of claims 1 to 8, wherein
the backlight unit has a light source that is configured to emit the light toward the rear face of the display panel, and a reflective sheet that is configured to reflect the light from the light source toward the rear face of the display panel, and
the support member is disposed on the reflective sheet.

10. The display device according to claim 9, wherein
the diffusion member is disposed spaced apart from the reflective sheet.

11. The display device according to claim 9, wherein
the diffusion member is disposed on the reflective sheet.
